# EUROPEAN PATENT APPLICATION

(11) **EP 1 489 637 A2**
(43) Date of publication of application: **22.12.2004**
(21) Application number: 04012405.9
(22) Date of filing: 26.05.2004
(51) Int. Cl.: H01H 9/54

(54) **A portable communication apparatus, a rotary input device having an and-user-exchangeable element, and an end-user-exchangeable element for a rotary input device**

(30) Priority: 29.05.2003 US 449373
(71) Applicant: Nokia Corporation, 00045 Espoo (FI)
(72) Inventor: Balle, Henrik, 2400 Copenhagen (DK); Bonnelykke, Jakob, 3650 Oalstykke (DK); Lodahl, Jesper, East Lake Villas, Unit B801, 100027 Beijing (CH); Christjansen, Rasmus, 2640 Hedehusene (DK); Saxe Knudsen, Christian, 2100 Copenhagen (DK)
(74) Representative: Andersson, Björn

(57) **Abstract**

A portable communication apparatus (100) has a rotary input device (200) adapted for use by an end-user to control the portable communication apparatus. The rotary input device comprises at least one element (310, 320, 340-344) which is exchangeable by the end-user.

## Description

### Field of the Invention

The present invention relates to the field of mobile telecommunication, and more particularly to a portable communication apparatus having a rotary input device adapted for use by an end-user to control the portable communication apparatus.

### Background of the Invention

A mobile terminal in the form of a mobile (cellular) telephone for a telecommunications system like GSM, UMTS, D-AMPS or CDMA2000 is a familiar example of a portable communication apparatus according to the above.

WO02/39712 discloses an image control system for controlling a menu on a display in a television system. The menu comprises a plurality of simultaneously displayed menu items. A selector is arranged to select an item from the menu. A user input device comprises a control device for generating a control signal to move the selector relative to the menu. Further, a rotary control is disclosed, wherein rotation of the control causes a corresponding rotation of the menu. Alternatively, a cursor is viewed on the menu screen that follows the menu items as a user operates the control device.

WO02/39712 further discloses applicability to mobile telephone menus. The menu on a screen of a telephone handset is shown as a two-dimensional circle. A rotary dial is provided on the front face of the handset. The handset has the usual features of a mobile telephone with the addition of the rotary dial positioned on the front face. On activation of the menu of the mobile telephone handset, the dial operates as the control device described above with reference to the television system. Of course, there is no transmission of a remote control signal as in the television system; instead the signal is coupled to the display within the handset. To select an item from the menu a user rotates the dial until either the cursor has moved into association with the desired menu item or the menu has been rotated so that the desired item has come into alignment with a selector region on the screen of the mobile telephone handset.

Using a rotary input device like the rotary dial described in WO02/39712 is advantageous for a mobile terminal, since it allows the user to control the terminal in a convenient way and, also, allows a user interface having fewer keys than in a traditional PIN- or telephone-type keypad. Typically, such a rotary input device will be heavily used and will represent a very central - if not the most important - input means in the user interface. On the other hand, there are problems or drawbacks associated with the state of the art as represented by WO02/39712. One problem is that heavy use of the rotary input device may cause wear and tear and, ultimately, either a malfunction or at least a less appealing appearance. Replacement of the rotary input device requires a substantive amount of work in terms of disassembly, substitution and assembly of the mobile terminal at a central repair site, as well as the logistics required for transporting the defective mobile terminal to and from such a central repair site. Another problem is that different users tend to prefer different appearances and/or different surface characteristics of the rotary input device in order to operate the terminal in an optimal way; one user may prefer a smooth surface on the rotary input device, whereas a second user prefers a rougher surface; a third user requires backlighting of the rotary input device to assist in low-light operating situations, whereas a fourth user, in contrast, will be disturbed by such backlighting, etc.

EP-A-1 028 574 discloses a radio telephone with an exchangeable housing, including a front housing portion and a rear housing portion. Such a radio telephone may be customized by its end-user by buying replacement front and rear housing portions as substitution for the existing ones. However, only the housing portions as a whole are exchangeable according to aforesaid EP-A-1 028 574.

Some contemporary mobile telephone models, such as the Nokia 3310, admit replacement of the keypad as one single unit; a complete set of keys are included in a key mat which may be exchanged by detaching the front housing portion from the telephone and then removing the key mat.

### Summary of the Invention

In view of the above, an objective of the invention is to solve or at least reduce the problems discussed above.

Generally, the above objective is achieved by a portable communication apparatus, a rotary input device and an exchangeable element according to the attached independent patent claims.

A first aspect of the invention is a portable communication apparatus having a rotary input device adapted for use by an end-user to control the portable communication apparatus, the rotary input device comprising at least one element which is exchangeable by said end-user.

In one embodiment, the rotary input device also comprises at least one essentially non-exchangeable part upon which said exchangeable element is mounted.

The portable communication apparatus may have an apparatus housing with a front surface which faces said end-user during normal operation of said apparatus, wherein said rotary input device is disposed in an opening in said front surface so that said exchangeable element is accessible to said end-user during said normal operation. The apparatus housing may comprise an exchangeable housing part, wherein said exchangeable element is removable from said rotary input device only once said exchangeable housing part has been removed from said portable communication apparatus.

The at least one exchangeable element may include a top ring which is rotary in a plane essentially parallel to said front surface.

The at least one exchangeable element may further comprise a center key disposed inside said top ring. Releasable fastening means may be provided for securing said center key to said top ring and for allowing said center key to be detached from said top ring so as to permit exchange of said center key by said end-user. In one embodiment, the center key is removable from said top ring only once said top ring has been removed from said portable communication apparatus. The releasable fastening means may comprise a snap locking.

The at least one essentially non-exchangeable part may comprise a bearing module to support rotation of said top ring. The bearing module may comprise engagement means for matching engagement with corresponding engagement means of said top ring, wherein said engagement means are such that said top ring is removable from said bearing module by said end-user. The engagement means of said top ring may include a plurality of protrusions disposed on a surface of said top ring, wherein said engagement means of said bearing module includes a plurality of recesses adapted for matching engagement with said plurality of protrusions. Said plurality of protrusions may be equidistantly disposed on an inner perimeter of said top ring.

The at least one exchangeable element may further comprise a set of additional keys disposed adjacently to an outer perimeter of said top ring. The set of additional keys may form an integral key frame member which is removable from said portable communication apparatus by said end-user.

The apparatus may further comprise a controller, wherein said bearing module and/or said top ring are/is associated with an encoder, said encoder being adapted to detect a position of said bearing module/top ring and to provide a signal to said controller representative of said detected position. The encoder may be adapted for optical detection of said position.

The apparatus may be embodied as a mobile terminal for a telecommunications system. Such telecommunications system may be selected from the group consisting of: GSM, UMTS, D-AMPS and CDMA2000.

A second aspect of the invention is a rotary input device for a portable communication apparatus, said rotary input device having at least one element which is exchangeable by an end-user of said portable communication apparatus.

A third aspect of the invention is an exchangeable element for a rotary input device according to the second aspect.

The invention provides several advantages over the prior art:
By providing the rotary input device with at least one element which is exchangeable, the end-user may customize the input device to fit his preferences as regards the visual appearance of the rotary input device in terms of e.g. favorite colors or patterns. In addition, thanks to the exchangeability of said element, e.g. the top ring, the end-user may change to a different surface structure that better suits his needs. For instance, a certain user may prefer a smooth surface, whereas another user more likes a rougher surface (for instance because such a rougher surface prevents finger slip when actuating the rotary input device). Such differences in surface structure may be obtained by using different materials for the (surface of) the exchangeable element, and/or by providing it with a physical pattern in the form of e.g. grooves, dimples, dots, ridges, etc. Further, the invention allows for the end-user to select the transparency of the exchangeable element, i.e. whether or not it transmits backlight from the interior of the portable communication apparatus (and thus appears "glowing" in the dark), by replacing the existing exchangeable element with one of a material which has the desired optical characteristics in terms of transparency or opaqueness.

Moreover, the invention also offers advantages for the manufacturer or supplier of the portable communications apparatus. Firstly, since the rotary input device may be customized by the end-user, less efforts may be spent in trying to design a rotary input device having a surface appearance that suits everybody; instead the surface appearance may be given a rather basic default design which then may be replaced by individual users as the case may be. Secondly, to design, produce and sell various exchangeable elements as accessories for the rotary input device offers further business opportunities. Thirdly, a rotary input device with an exchangeable element - which preferably is a part that is in contact with the end-user during normal operation and thus is subject to wear and tear - provides simpler repair of the portable communication apparatus in case of a malfunction or excessive wear of said element.

Other objectives, features and advantages of the present invention will appear from the following detailed disclosure, from the attached dependent claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

The present invention will now be described in more detail, reference being made to the enclosed drawings.

Fig. 1 is a schematic perspective view of a portable communication apparatus having a rotary input device with an exchangeable element according one embodiment.

Fig. 2 is a perspective view which illustrates the rotary input device of Fig. 1 in more detail.

Fig. 3 is an exploded perspective view of the rotary input device of Fig. 2.

Fig. 4 is a cross-sectional partial view of the rotary input device of Fig. 2, illustrating one key in a set of additional keys and the way in which it is detachably and movably attached to a key mat of the rotary input device.

Fig. 5 is a perspective view which illustrates a top ring and a bearing module of the rotary input device.

Fig. 6 is a cross-sectional partial view which illustrates how the top ring is detachably and movably attached to the bearing module.

### Detailed Description of the Invention

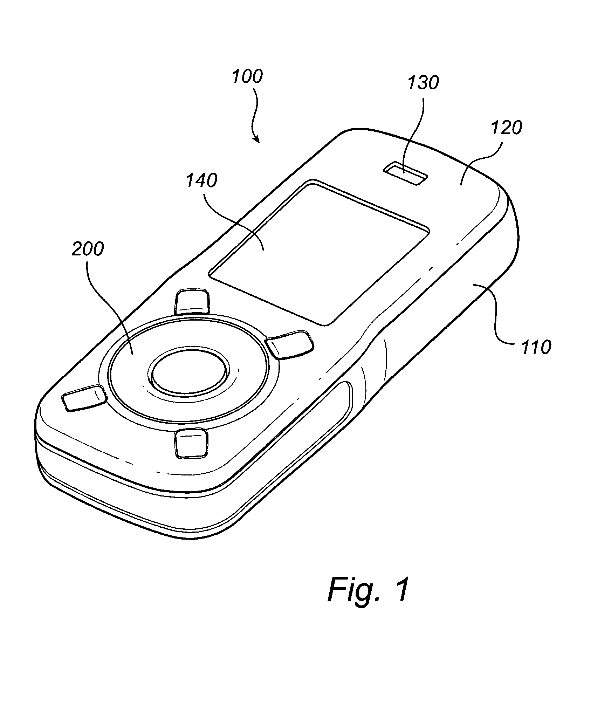

Fig. 1 illustrates a first embodiment of a portable communication apparatus according to the invention. The portable communication apparatus may be a mobile (cellular) telephone for any commercially available mobile telecommunications system, such as GSM, UMTS, D-AMPS or CDMA2000. The portable communication apparatus may alternatively be another kind of mobile equipment, such as a portable digital assistant (PDA) or a communicator.

In the embodiment shown in Fig. 1, the portable communication apparatus is a mobile telephone 100 having an apparatus housing 110. A front surface 120 of the mobile telephone 100 has a speaker opening 130 and a display 140. The front surface 120 will face the end-user of the mobile telephone 100 during normal operation, as is well known in the art.

The mobile telephone 100 also has a rotary input device 200 which is accessible to the end-user at said front surface 120 and which has an exchangeable element according one embodiment. The rotary input device 200 is shown in more detail in the remaining drawings and may constitute the main or sole input device by which the end-user may control the mobile telephone through manual input. Of course, the mobile telephone 100 comprises various other components which are contained inside the apparatus housing 110 and/or are not shown in Fig. 1, such as a microphone, a built-in or external antenna, a radio transceiver, a speech encoder/decoder, a channel encoder/decoder, a controller or processing device (CPU), an electronic memory, an operating system and various segments of software code, which are stored in the memory and are executed by the controller so as to perform the various functions and applications of the mobile telephone 100. As is well known, the radio transceiver comprises various analog and digital electronic components, such as power amplifiers, filters, local oscillators and mixers, which together will modulate an outgoing audio signal onto a carrier wave, that is emitted as electromagnetic waves propagating from the antenna of the mobile telephone 100, as well as receive incoming radio signals and demodulate them into incoming audio signals.

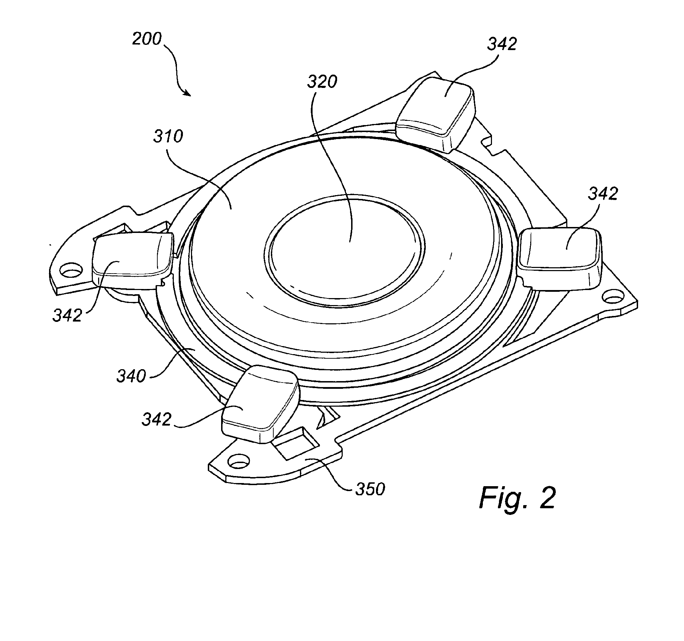

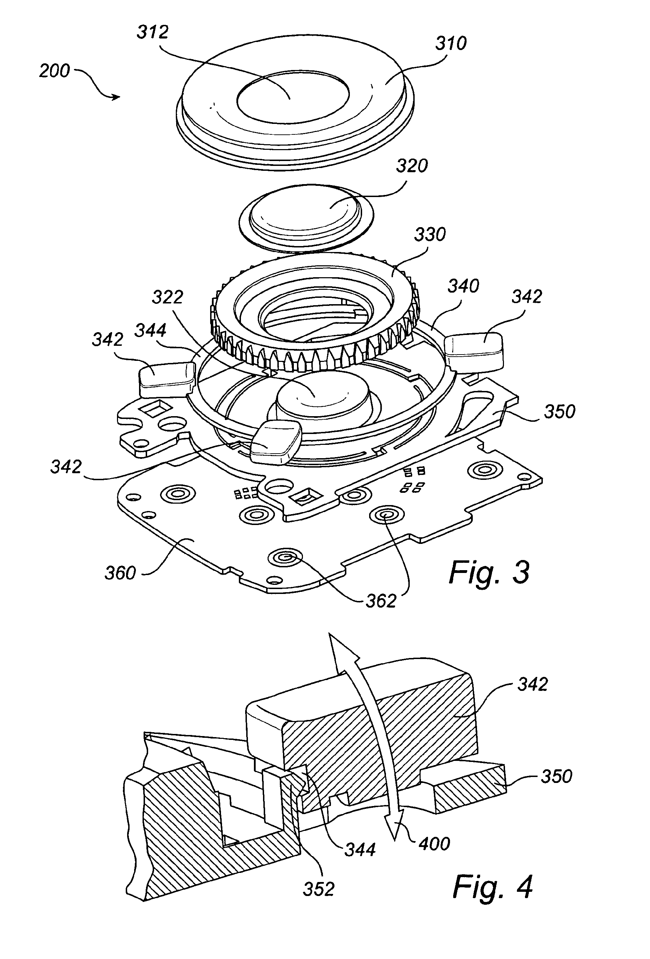

As seen in Figs. 2 and 3, the rotary input device 200 comprises a rotator having at its upper surface a top ring 310 which is mounted upon a bearing module 330, so as to allow the end-user to actuate the rotator by his finger and thereby provide control input to the controller, operating system and applications of the mobile telephone 100. For instance, the rotator may be used for scrolling between different menus or menu options in the operating system and/or applications, for controlling the position of a cursor on the display 140, for selecting different elements of a palette of characters, digits, letters, colors, setting values, etc. To this end, the rotator has an encoder which is adapted to detect a position of the bearing module/top ring and to provide a signal to said controller representative of said detected position. The encoder may be integrated with the bearing module 330 or top ring 310, or may be a separate unit which however is associated with the bearing module/top ring so as to allow detection of the rotation thereof. The encoder may for instance operate optically, magnetically or electromechanically and employ any existing encoder technology.

As seen further in Figs. 2 and 3, the rotary input device 200 comprises a center key 320 disposed in a central opening 312 of the top ring 310. The center key 320 has a base 322 which in the present embodiment supports the center key 320 to function as a five-way key (also known as navigation key), being depressible at four peripheral positions which represent directions "north", "south", "east" and "west" as well as at a central position to represent "down"/"select"/"ok"/"enter".

Additionally, the rotary input device 200 comprises a set of additional keys 342 which are equidistantly disposed adjacently to an outer perimeter of the top ring 310. The set of additional keys 342 are attached to an annular frame member 344 so as to form an integral key frame 340. The key frame 340 is attached to a key mat 350 which acts to support the key frame 340 and also as a light guide for conveying light between an underlying PCB (printed circuit board) unit 360 and the upper end of the rotary input device 200 for illuminating purposes.

The PCB unit 360 has a plurality of collapsible domes 362 and underlying respective electrical contacts for each of the four additional keys 342 of the key frame 340 as well as for each of the five contact points of the five-way center key 320. The domes 362 may be provided as a separate dome foil which is disposed on top of the printed circuit board in alignment with the respective electrical contacts. The PCB unit 360 has light sources, such as light emitting diodes, for illuminating the rotary input device 200. The PCB unit also has electronic circuitry, which is coupled to the electrical contacts, and to the encoder of the rotator, and which is adapted to detect inputs on any of the keys 320, 342 or the rotator and in response supply control signals to the controller of the mobile telephone 100.

In the disclosed embodiment, exchangeability of elements of the rotary input device 200 is provided by designing each of the top ring 310, center key 320 and key frame 340 (additional keys 342) to be individually exchangeable.

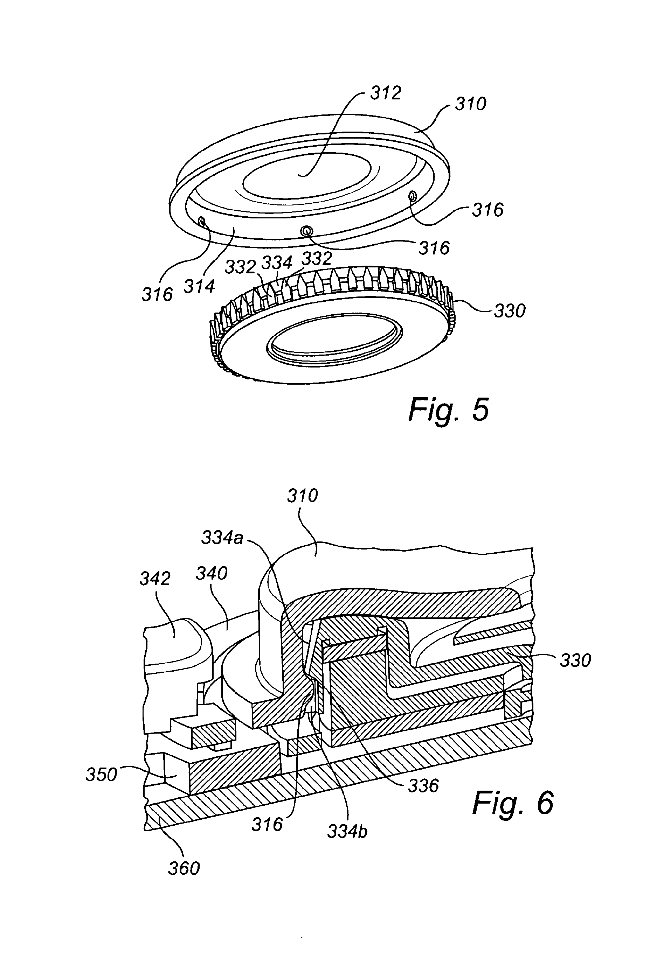

As seen in Figs. 5 and 6, the exchangeability of the top ring 310 is obtained by the provision of a plurality of protrusions 316 which are equidistantly disposed on the inner surface of the top ring along its inner perimeter. In the present embodiment, 3-6 protrusions are provided, shaped as hemispheres. When the top ring is pressed on top of the bearing module 330, the hemispherical protrusions 316 will engage with a plurality of recesses 334 on the outer side edge surface of the bearing module 330. More specifically, the peripheral edge of the bearing module 330 has a plurality of teeth 332, forming between them said plurality of recesses 334 for receiving the hemispherical protrusions 316. As seen further in Fig. 6, the peripheral edge of the bearing module 330 has an undercut 334b at its lower portion. Together with an inclined upper portion 334a, a ridge 336 is formed which will secure the protrusion 316 in the undercut 334b and prevent the top ring 310 from escaping the bearing module 330 during normal use. By applying a stronger pulling force on the top ring 310, however, the end-user may remove the top ring 310 from the bearing module 330 and exchange it for a new top ring at his desire. To this end, the teeth 332 has a pointed upper end which will assist the end-user and guide the protrusions 316 into the correct positions when the new top ring 310 is pressed against the bearing module 330, thus facilitating easy and rapid exchange of the top ring.

Fig. 4 illustrates the exchangeability of the key frame 340 with its set of additional keys 342. The key frame 340 is secured to the key mat 350 by matching engagement between a snap 352 formed on the key mat 350 and a corresponding recess 344 in each key 342. As indicated by an arrow 400, the matching engagement will lock the key frame 340 onto the key mat 350 while still allowing a certain degree of freedom for the key 342, so that it may rock when depressed and actuate the dome 362 on the PCB unit 360. By bending the key frame 340 to a sufficient degree, the snaps 352 will be release from their engagement within the recesses 344, and the end-user may remove and replace the key frame 340 accordingly.

Exchangeability of the center key 320 is obtained in the present embodiment by matching engagement (for instance through snap locking similar to the one shown in Fig. 4) between an outer edge of the center key 320 and the inner perimeter of the top ring 310 (i.e., the circumference of the opening 312). In the present embodiment, the center key 320 may only be removed from the rotary input device 200 once the top ring 310 has been removed. After having done this, the end-user may bend apart the top ring 310 and the center key 320 and exchange any of them.

Further restrictions may be applied as regards removal of the top ring 310, center key 320 or additional keys 342/key frame 340 from the rotary input device 200. In the present embodiment, the apparatus housing 110 is made detachable from the mobile telephone 100, for instance in the manner described in EP-A-1 028 574 in a previous section of this specification. The top surfaces of the top ring 310, center key 320 and additional keys 342 protrude through openings in the front surface 120 of the detachable apparatus housing 110 and are thus accessible to the end-user during normal operation. However, the openings are sized and designed to prevent removal of the top ring 310, center key 320 and additional keys 342 when the apparatus housing 110 is attached to the mobile telephone 100; only once the apparatus housing 110 has been detached may these parts be removed from the mobile telephone 100 for exchange.

The invention has mainly been described above with reference to one embodiment. However, as is readily appreciated by a person skilled in the art, other embodiments than the one disclosed above are equally possible within the scope of the invention, as defined by the appended patent claims.

## Claims

1. A portable communication apparatus (100) having a rotary input device (200) adapted for use by an end-user to control the portable communication apparatus, **characterized in that** the rotary input device (200) comprises at least one element (310, 320, 340-344) which is exchangeable by said end-user.

2. An apparatus as in claim 1, wherein said rotary input device (200) also comprises at least one essentially non-exchangeable part (330, 350, 360) upon which said exchangeable element (310, 320, 340-344) is mounted.

3. An apparatus as in claim 1 or 2, further having an apparatus housing (110) with a front surface (120) which faces said end-user during normal operation of said apparatus (100), wherein said rotary input device (200) is disposed in an opening in said front surface so that said exchangeable element (310, 320, 340-344) is accessible to said end-user during said normal operation.

4. An apparatus as in claim 3, wherein said apparatus housing (110) comprises an exchangeable housing part and wherein said exchangeable element (310, 320, 340-344) is removable from said rotary input device only once said exchangeable housing part has been removed from said portable communication apparatus (100).

5. An apparatus as in claim 4, wherein said at least one exchangeable element includes a top ring (310) which is rotary in a plane essentially parallel to said front surface (120) .

6. An apparatus as in claim 5, wherein said at least one exchangeable element further comprises a center key (320) disposed inside said top ring (310).

7. An apparatus as in claim 6, further comprising releasable fastening means for securing said center key (320) to said top ring (310) and for allowing said center key to be detached from said top ring so as to permit exchange of said center key by said end-user.

8. An apparatus as in claim 7, wherein said center key (320) is secured to said top ring (310) by said releasable fastening means, so that said center key is removable from said top ring only once said top ring has been removed from said portable communication apparatus (100) .

9. An apparatus as in claim 8, wherein said releasable fastening means comprises a snap locking.

10. An apparatus as in claim 2 and 5, wherein said at least one essentially non-exchangeable part comprises a bearing module (330) to support rotation of said top ring (310).

11. An apparatus as in claim 10, wherein said bearing module (330) comprises engagement means (332, 334, 334a, 334b, 336) for matching engagement with corresponding engagement means (316) of said top ring (310) and wherein said engagement means are such that said top ring is removable from said bearing module by said end-user.

12. An apparatus as in claim 11, wherein said engagement means of said top ring (310) includes a plurality of protrusions (316) disposed on a surface of said top ring, and wherein said engagement means of said bearing module (330) includes a plurality of recesses (334) adapted for matching engagement with said plurality of protrusions.

13. An apparatus as in claim 12, wherein said plurality of protrusions (316) are equidistantly disposed on an inner perimeter of said top ring (310).

14. An apparatus as in claim 5, wherein said at least one exchangeable element further comprises a set of additional keys (342) disposed adjacently to an outer perimeter of said top ring (310).

15. An apparatus as in claim 14, wherein said set of additional keys (342) form an integral key frame member (340) which is removable from said portable communication apparatus (100) by said end-user.

16. An apparatus as in any of claims 1-15, embodied as a mobile terminal (100) for a telecommunications system.

17. An apparatus as in claim 16, wherein said telecommunications system is selected from the group consisting of: GSM, UMTS, D-AMPS and CDMA2000.

18. A rotary input device (200) for a portable communication apparatus (100), **characterized in that** said rotary input device (200) comprises at least one element (310, 320, 340-344) which is exchangeable by an end-user of said portable communication apparatus (100).

19. A device as in claim 18, wherein said rotary input device (200) also comprises at least one essentially non-exchangeable part (330, 350, 360) upon which said exchangeable element (310, 320, 340-344) is mounted.

20. A device as in claim 18 or 19, wherein said at least one exchangeable element includes a top ring (310) which is rotary in a plane essentially parallel to a front surface (120) of said portable communication apparatus (100).

21. A device as in claim 20, wherein said at least one exchangeable element further comprises a center key (320) disposed inside said top ring (310).

22. A device as in claim 21, further comprising releasable fastening means for securing said center key (320) to said top ring (310) and for allowing said center key to be detached from said top ring so as to permit exchange of said center key by said end-user.

23. A device as in claim 22, wherein said center key (320) is secured to said top ring (310) by said releasable fastening means, so that said center key is removable from said top ring only once said top ring has been removed from said portable communication apparatus (100).

24. A device as in claim 23, wherein said releasable fastening means comprises a snap locking.

25. A device as in claim 19 and 20, wherein said at least one essentially non-exchangeable part comprises a bearing module (330) to support rotation of said top ring (310).

26. A device as in claim 25, wherein said bearing module (330) comprises engagement means (332, 334, 334a, 334b, 336) for matching engagement with corresponding engagement means (316) of said top ring (310) and wherein said engagement means are such that said top ring is removable from said bearing module by said end-user.

27. A device as in claim 26, wherein said engagement means of said top ring (310) includes a plurality of protrusions (316) disposed on a surface of said top ring, and wherein said engagement means of said bearing module (330) includes a plurality of recesses (334) adapted for matching engagement with said plurality of protrusions.

28. A device as in claim 27, wherein said plurality of protrusions (316) are equidistantly disposed on an inner perimeter of said top ring (310).

29. A device as in claim 20, further comprising a set of additional keys (342) disposed adjacently to an outer perimeter of said top ring (310).

30. A device as in claim 29, wherein said set of additional keys (342) form an integral key frame member (340) which is removable from said portable communication apparatus (100) by said end-user.

31. An exchangeable element (310, 320, 340-344) for a rotary input device (200) according to any of claims 18-30.
